# EUROPÄISCHE PATENTSCHRIFT

(11) **EP 2 180 981 B1**
(45) Veröffentlichungstag und Bekanntmachung des Hinweises auf die Patenterteilung: **12.10.2011**
(21) Anmeldenummer: 08785453.5
(22) Anmeldetag: 08.08.2008
(51) Int. Cl.: B25J 15/00, B25J 15/04, B25J 15/06, B25J 19/02, B23D 35/00, B26D 3/10, B26D 7/18, B26F 1/38

(54) **ROBOTERWERKZEUG MIT EINER SCHNEIDKLINGE UND ENTSPRECHENDES VERFAHREN ZUM BEARBEITEN VON WERKSTÜCKEN**
ROBOT TOOL, ROBOT SYSTEM AND METHOD FOR MACHINING WORKPIECES
OUTIL ROBOT, SYSTÈME ROBOT ET PROCÉDÉ DE TRAITEMENT DE PIÈCES

(30) Priorität: 31.08.2007 DE 102007041423
(43) Veröffentlichungstag der Anmeldung: 05.05.2010
(73) Patentinhaber: ABB Technology AB, 721 83 Västerås (SE)
(72) Erfinder: SCHMIDT, Peter, G., 61231 Bad Nauheim (DE); FELTZ, Guy, 35647 Waldsolms (DE)
(74) Vertreter: Partner, Lothar
(86) Internationale Anmeldenummer: PCT/EP2008/006550
(87) Internationale Veröffentlichungsnummer: WO 2009/030338

(56) Entgegenhaltungen:
- EP-A- 0 845 440
- WO-A-01/85407
- WO-A-2007/018040
- WO-A-2007/039978
- DE-A1- 19 724 040
- DE-U1- 20 215 558
- DE-U1-202005 003 279
- GB-A- 2 343 401
- US-A- 4 744 241
- US-A- 5 179 878

## Beschreibung

Die Erfindung betrifft ein Roboterwerkzeug zum Bearbeiten von Werkstücken mit einem Anschlusselement für eine Verbindung mit einem Roboter. Zudem betrifft die Erfindung ein Robotersystem und ein Verfahren zur Bearbeitung von Werkstücken.

Roboterwerkzeuge zum Bearbeiten von Werkstücken sind in einer breiten Anwendungspalette bekannt, so zum Beispiel zum Lackieren, Schweißen oder Kleben. Es gibt aber auch Anwendungsgebiete bei der die Bearbeitung von Werkstücken, bisher noch nicht mit Robotern ausgeführt werden, sondern häufig noch manuell, also von entsprechendem Bedienpersonal händisch bewältigt werden.

Aus der GB2343401A ist ein Werkzeug bekannt geworden, das ein Messer zum Abtrennen der Grate und eine Halterung für das Messer umfasst, wobei die Halterung derart angeordnet ist, dass das Messer mit Kraft vorwärts gegen die Grate bewegt wird; wenn ein Automat das Werkzeug auf einer vorbestimmten Bahn an dem Formteil entlang führt. Der Automat ist derart vorprogrammiert, dass das Messer während seiner Vorwärtsbewegung entlang dem Grat seine Normalposition beibehält. Weicht der Grat von der Bahn ab, zwingt die Halterung das Messer in die richtige Position am Grat, so dass das Messer einer einer manuellen Führung entsprechenden Bahn folgt.

Andererseits ist es zum Beispiel vorgesehen, einen Überstand eines Schutzes über die Umrandung eines Werkstückes hinaus, beispielsweise eine Schutzfolie die über eine LCD-Anzeige geklebt ist, manuell mit einer scharfen Klinge, zum Beispiel mit einem entsprechenden Messer von Hand abzuschneiden. Solche Messer werden vergleichsweise schnell stumpf und müssen dementsprechend häufig ausgetauscht werden. Zudem besteht eine akute Verletzungsgefahr für den Fall, dass die Klingen beim Schneidevorgang abbrechen.

Ausgehend von diesem Stand der Technik ist es Aufgabe der Erfindung, ein Roboterwerkzeug, ein Robotersystem und ein Verfahren zum Bearbeiten von Werkstücken anzugeben, mit dem eine Bearbeitung schneller und exakter als seither erfolgt.

Diese Aufgabe wird erfindungsgemäß durch das Roboterwerkzeug zum Bearbeiten von Werkstücken mit den im Anspruch 1 genannten Merkmalen gelöst.

Demnach betrifft die Erfindung ein Roboterwerkzeug zum Bearbeiten von Werkstücken mit einem Anschlusselement für eine Verbindung mit einem Roboter, wobei eine Schneidklinge durch einen mit dem Halteelement verbundenen Klingenhalter in einer vorgegebenen Position gehalten ist, wobei die Schneidklinge federnd mit dem Halteelement verbunden ist, wobei eine Gneifvorrichtung mit dem Halteelement verbunden, insbesondere lösbar verbunden ist., wobei das Halteelement ein Klingenprüfgerät für die Schneidklinge aufweist und dass das Halteelement durch das Anschlusselement mit dem Roboter verbindbar ist.

Hierdurch wird ein Roboterwerkzeug geschaffen, welches Schneidarbeiten als Bearbeitung von Werkstücken besonders exakt ausführt. Die Schneidklinge ist nämlich in einer vorgegebenen Position gehalten und in Zusammenarbeit mit dem Roboter mit der Genauigkeit der Roboterbewegung einsetzbar.

Ein weiterer Vorteil ergibt sich, wenn das erfindungsgemäße Robotenrverkzeug einen Schneidklingenwechsler aufweist.

Auf diese Weise ist es sichergestellt, dass eventuell unscharf gewordene Schneidklingen auf einfache Weise auswechselbar sind oder einfach turnusmäßig insbesondere nach einer gewissen Gebrauchszeit ausgewechselt werden.

Vorteilhaft ist es auch, wenn das Haltelement des Roboterwerkzeugs eine Prüfvorrichtung für die Schneidklingen aufweist.

Auf diese Weise wird die Schneidklinge, die gerade in Gebrauch ist, auch gerade so lange verwendet werden können, wie eine vorbestimmte Schärfe noch gegeben ist. Erst eine als unbrauchbar festgestellte Schneidklinge wird dann entsprechend ausgetauscht.

Eine vorteilhafte Ausgestaltung des erfindungsgemäßen Roboterwerkzeuges kennzeichnet sich dadurch, dass die Schneidklinge federnd mit der Haltevorrichtung verbunden ist.

Auf diese Weise ist vorteilhaft ein Toleranzausgleich erreicht. Ist die federnde Aufnahme beispielsweise in einer Raumrichtung wirksam, so werden Unebenheiten ans einer Schnittkante oder Materialdickenänderungen an dem zu schneidenden Werkstück oder sonstige nicht vorhersehbare Ereignisse besonders einfach ausgeglichen.

Die Schneidleistung wird vorteilhaft erhöht, in dem die Schneidklinge des erfindungsgemäßen Roboterwerkzeuges eine Heißklinge ist.

Zudem sieht eine Weiterbildung des erfindungsgemäßen Roboterwerkzeuges ein weiteres Anschlusselement an der Haltevorrichtung vor.

Auf diese Weise ist ein weiteres Bearbeitungsgerät mit der Haltevorrichtung und damit am erfindungsgemäßen Roboterwerkzeug integrierbar. Ein solches weiteres Bearbeitungsgerät ist beispielsweise eine zweite Schneidklinge mit dem Vorteil, dass eine zweite Schneidklinge im Bedartsfalle besonders schnell zur Verfügung steht. Aber auch der Anschluss von anderen Geräten oder Vorrichtungen, beispielsweise eine Absaugvorrichtung oder Messvorrichtungen sind ohne weiteres denkbar.

Besonders vorteilhaft ist es, wenn eine Greifvorrichtung mit dem Haltelement verbunden, insbesondere lösbar verbunden ist.

Auf diese Weise ist es dem erfindungsgemäßen Roboterwerkzeug besonders einfach ermöglicht, mit der Greifvorrichtung zunächst das zu bearbeitende Werkstück in eine vorgegebene Bearbeitungsposition zu verbringen und anschließend, ohne dass ein zweiter Roboter oder gar ein Werkzeugwechsel am betreffenden Roboter notwendig wäre, sofort mit der Bearbeitung des Werkstücks zu beginnen. Insbesondere dann, wenn die Greifvorrichtung lösbar mit dem Halteelement verbunden ist, ist das erfindungsgemäße Roboterwerkzeug in der Lage, die Greifvorrichtung an dem Werkstück zu belassen. Dies ermöglicht die spätere Wiederaufnahme des Werkstücks in besonders einfacher Weise.

Eine vorteilhafte Weiterbildung des erfindungsgemäßen Roboterwerkzeugs ist erreicht, wenn das Haltelement einen, insbesondere optischen oder laserbasierten Sensor aufweist.

Auf diese Weise ist es ermöglicht, dass das Roboterwerkzeug mit dem Sensor, zum Beispiel einer Digitalkamera, ein Bild seiner Umgebung macht und derart durch Analyse des Bildes seine Umgebung erkennt und auf diese Weise mögliche Hindernisse in Bewegungsfahrt berücksichtigbar sind.

Der Sensor wird vorteilhaft auch dafür eingesetzt, wenigstens durch ein zuvor vorgegebenen Bezugspunkt oder eine Bezugskantenlinie, oder ähnliches an einem zum bearbeitenden Werkstück oder im Arbeitsbereich des Roboters zu verifizieren.

Derart ist es besonders einfach möglich, die korrekte Lage des zu bearbeitenden Werkstücks zu bestimmen oder zu bestätigen. Eine Verifikation erfolgt beispielsweise durch suchen des Bezugspunktes an einer erwarteten oder geplanten Stelle am Werkstück. Ist der Bezugspunkt dort nicht zu finden, wird mit Suchbewegungen um die erwartete Position herum der tatsächliche Bezugspunkt, z. B. eine aufgebrachte Marke oder typische Stelle am Werkstück gesucht.

Genau so gut ist es möglich, dass durch den Sensor das Werkstück insgesamt vermessbar ist. Zudem ist es erfindungsgemäß vorgesehen, dass mit dem Sensor die Lage des Werkstücks erkennbar und gegebenenfalls ein Bewegungsprogramm des Roboters mit der erkannten Lage korrigierbar ist.

Auf diese Weise können auch leichte Abweichungen bei der Positionierung der Werkstücke in ihrer Werkstückhalterung bedarfsweise, also individuell zum jeweiligen Bearbeitungsvorgang, korrigiert werden.

Zudem wird die Aufgabe gelöst durch ein Robotersystem mit einem Roboter und einem erfindungsgemäßen Roboterwerkzeug mit den in Anspruch 14 genannten Merkmalen.

Bei einem derartigen Robotersystem, das ein erfindungsgemäßes Roboterwerkzeug aufweist, werden somit auch alle vorstehend genannten Vorteile erzielt, die das Roboterwerkzeug selbst aufweist.

Zudem ist in einer vorteilhaften Ausgestaltung des erfindungsgemäßen Robotersystems ein Klingenwechsler im Arbeitsbereich des Roboters angeordnet und das Roboterwerkzeug arbeitet bedarfsweise mit dem Klingenwechsler zusammen.

Bei einer derartigen Ausgestaltung des Erfindungsgegenstandes ist das Roboterwerkzeug selbst von der Funktion des Klingenwechselns entlastet und entsprechend vereinfacht ausgestaltbar.

Entsprechendes gilt für die Ausgestaltung des Robotersystems mit einem Klingenprüfgerät, das im Arbeitsbereich des Roboters angeordnet ist und das mit dem Roboterwerkzeug bedarfsweise zusammen arbeitet.

Schließlich wird die Aufgabe auch gelöst durch das erfindungsgemäße Verfahren zum Bearbeiten eines Werkstücks mit den in Anspruch 15 genannten Merkmalen.

Demgemäß betrifft die Erfindung ein Verfahren zum Bearbeiten von Werkstücken mit einem erfindungsgemäßen Roboterwerkzeug, das dadurch gekennzeichnet ist, dass die Schneidklinge durch das Robotersystem entlang eines vorgegebenen Bewegungspfades bewegt wird.

Mit diesem Automatisierungsschritt ist zunächst die Gleichmäßigkeit und Wiederholbarkeit der Bearbeitung und damit eine entsprechendes hohes Qualitätsniveau erzielbar. Darüber hinaus kann die Schneidgeschwindigkeit entsprechend der verwendeten Klingen optimiert werden, was in der Regel dazu führt, dass erheblich höhere Schnittleistungen erzielt werden. Des Weiteren ist der Arbeitsbereich des Roboters eine Sicherheitszone, in der sich während des Betriebs des Roboters kein Bedienpersonal aufhält. Damit sind die sonst üblichen Möglichkeiten einer Verletzung oder Gefährdung von solchen Personen von vorne herein ausgeschlossen.

Eine vorteilhafte Ergänzung des erfindungsgemäßen Verfahrens wird dadurch erreicht, dass ein Referenzpunkt für einen Startpunkt des Bewegungspfades durch den Sensor ermittelt wird.

Auf diese Weise ist die Verifizierung der Bewegungsbahn oder eine Korrektur des Bewegungspfades entsprechend der individuellen Lage des gerade zu bearbeitenden Werkstückes in besonders einfacher Weise sicher gestellt.

Zur Verbesserung der Schnittqualität ist es beim erfindungsgemäßen Verfahren vorgesehen, dass die Schneidklinge vor und/oder nach jedem Schnitt auf ihre Beschaffenheit (z.B. Bruch, Verbiegung, etc.) geprüft wird.

Auf diese Weise ist die Umsetzung von vorgegebenen Qualitätsstandards auf besonders einfache Weise umsetzbar.

Weitere vorteilhafte Ausgestaltungen des Erfindungsgegenstandes sind den weiteren abhängigen Ansprüchen zu entnehmen.

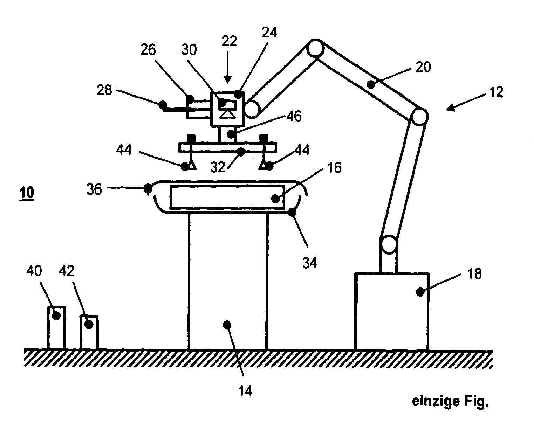

Anhand des in der Zeichnung dargestellten Ausführungsbeispieles sollen die Erfindung, vorteilhafte Ausgestaltungen, Verbesserungen der Erfindung, sowie weitere Vorteile näher erläutert und beschrieben werden.

Es zeigt:
- Einzige Figur: eine Skizze eines Robotersystems.

Die einzige Figur zeigt ein Robotersystem 10 mit einem Roboter 12, einem Werkstücktisch 14 auf dem ein Werkstück 16 angeordnet ist. Im dargestellten Beispiel weist der Roboter 12 einen Roboterfuß 18 sowie einem mehrachsigen Roboterarm 20 auf, der an seinem freien Ende ein Kombiwerkzeug 22 trägt. Dabei ist das Kombiwerkzeug 22 mit einem nicht näher dargestellten Anschlussflansch des Roboterarms 20 fest verbunden, so dass der Roboter 12 sowohl die räumliche Lage als auch die Ausrichtung des Kombiwerkzeugs 22 durch einfaches Bewegen bestimmt.

Das Kombiwerkzeug 22 ist mit einem Halteelement 24 mit dem Roboterarm 20 verbunden. Zudem dient das Halteelement 24 als Basiselement für einen Klingenhalter 26, in dem eine Klinge 28 eingespannt ist, für ein Sensorsystem 30 sowie für eine Sauggreifvorrichtung 32. Mit all diesen Bauteilen 26, 30, 32 ist das Halteelement 24 fest verbunden.

Das Kombiwerkzeug 22 ist in dieser Figur so dargestellt, dass die Sauggreifvorrichtung 32 unmittelbar gegenüber dem zu bearbeitenden Werkzeug 16 angeordnet ist, wobei dieses bereits in einem Werkstückhalter 34 auf dem auf dem Boden stehenden Werkzeugtisch 14 abgelegt ist. Zudem ist die Sauggreifvorrichtung 32 in der gezeigten Figur von dem Werkstück 16 beabstandet. Auf der vom Werkstücktisch 14 abgewandten Seite des Werkstücks 16 ist eine Schutzfolie 36 mit der betroffenen Seite des Werkstücks 16 verbunden. In diesem Beispiel soll das Werkstück 16 ein Solarmodul sein, das aus einer Anordnung einer Vielzahl von einzelnen Solarzellen hergestellt wurde wobei die Schutzfolie 36 als Schutz der Solarzellen für die weiteren Bearbeitungsschritte und auch für einen eventuellen späteren Transport dienen soll. Im gezeigten Beispiel ist diese Schutzfolie 36 jedoch noch größer als die betreffende Oberfläche des Werkstückes 16, so dass die Aufgabe für den Roboter mit seinem Werkzeug darin besteht, die Schutzfolie entlang der die Oberfläche begrenzenden Kanten möglichst nah an diesen Kanten abzuschneiden.

In einem Arbeitsbereich des Roboters auf dem Boden stehend sind noch neben dem Werkzeugtisch 14 noch ein Klingenprüfgerät 40 sowie ein Klingenwechselgerät 42 gezeigt. Auf diese Weise ist es dem Roboter 12 möglich, während der Bearbeitung des Werkstücks 16 oder vor oder nach jeder Bearbeitung eines Werkstücks die Beschaffenheit der Schneidklinge überprüfen zu lassen und gegebenenfalls einen Klingenwechsel durchzuführen. Es ist innerhalb des Erfindungsgedankens, wenn solche Geräte 40, 42 in entsprechend angepasster Form bereits am Haltebasiselement 24 des Kombiwerkzeugs 22 angeordnet sind. In diesem Fall entfällt vorteilhafterweise die verschiedenen Bewegungen des Roboterarms die notwendig sind, um das Klingenprüfgerät 40 oder das Klingenwechselgerät 42 zu erreichen.

Im Beispiel ist eine Kaltklinge gezeigt. Genauso einsetzbar sind aber auch Heißklingen die dem Fachmann prinzipiell bekannt sind. Hierdurch wird die Standzeit der Klingen erhöht.

Mit dem gewählten Beispiel soll insbesondere gezeigt werden, dass die Bearbeitung des Werkstücks 16 durch das erfindungsgemäße Kombiwerkzeug 22 in Verbindung mit dem Roboter 20 und weiteren Bauteilen 40, 42, 14 zu einem Robotersystem 10 eine besonders schnelle und sichere Bearbeitung von Werkstücken gewährleistet.

Mit dem gezeigten Robotersystem 10 wird das erfindungsgemäße Verfahren zum Bearbeiten der Werkstücks 16 mit dem Kombiwerkzeug 22 wie folgt ausgeführt. Zunächst fährt der Roboter eine in dieser Figur nicht näher gezeigte Übergabestation für nicht bearbeitete Werkstücke an. Dort wird die Sauggreifvorrichtung 32 in eine Position oberhalb des nächsten zu bearbeitenden Werkstückes in eine ähnliche Position verbracht wie sie in dieser Figur gezeigt ist, nämlich unmittelbar oberhalb einer Seite des Werkstücks, das die Schutzfolie trägt. Die Skizze zeigt eine Seitenansicht auf das Sauggreifwerkzeug 32, so dass in dieser Ansicht lediglich ein erster und ein zweiter Sauggreifer 44 zu sehen sind, je nach Aufgabenstellung, Form und Größe des Werkstückes wird gegebenenfalls ein Sauggreifer ausreichen, es können aber auch wesentlich mehr von solchen Sauggreifern 44 notwendig sein, beispielsweise sechs Stück um ein Solarmodul sicher zu greifen zu halten und auch zu transportieren. Der Roboter verfährt nun die Sauggreifvorrichtung 32 bis die Sauggreifer 44 an der Oberfläche des Werkstücks 16 anliegen. Sodann werden die Sauggreifer 44 so angesteuert, dass eine Saugwirkung erzielt wird und das Werkstück 16 an der Sauggreifvorrichtung haftet.

Nun wird das Werkstück 16 durch den Roboter von der Übergabeposition bis zu einer Stelle oberhalb des Werkzeugtisches 14 verbracht. In einer weiteren Roboterbewegung wird das Werkstück 16 in die Haltevorrichtung 34 des Werkzeugtisches 14 abgelegt und die Saugwirkung der Sauggreifvorrichtung 32 abgeschaltet, so dass diese vom Werkstück 16 nunmehr entkoppelt oder gelöst ist.

Alternativ zu diesem Vorgehen, kann beispielsweise ein Verbindungselement 46 zwischen der Sauggreifvorrichtung 32 und dem Basiselement 24 als lösbare oder ansteuerbare Kupplung so ausgestaltet sein, dass eine Robotersteuerung oder eine Werkzeugsteuerung die Sauggreifvorrichtung 32 vom Basiselement 22 bedarfsweise entkoppelt oder entkuppelt. Das bedeutet, dass sobald das Werkstück 16 in der Werkstückhalterung 34 positioniert ist, verbleibt die Sauggreifvorrichtung 32 durch die Verbindung mit den Sauggreifern 44 und dem Werkstück, an diesem wird die komplette Sauggreifvorrichtung durch Entkoppelung der Kupplung am Zwischenstück 46 vollständig entkoppelt.

In jedem Fall ist das Roboterwerkzeug 22 nunmehr in der Lage, weitere Arbeitsschritte mit anderen Vorrichtungen durchzuführen. Zunächst wird die Kamera 30 durch eine entsprechende Kombiwerkzeug-/Roboterbewegung in eine Position oberhalb des Werkstückes 16 gebracht, so dass mit dem Sensorsystem das komplette Werkstück vermessen werden kann. Anhand der Messpunkte wird nun die exakte Position des Werkstücks 16 in seiner Werkstückhalterung 34 bestimmt und zudem ein Referenzpunkt berechnet, der, dazu dient, den Startpunkt der Schneidbewegung mit der Klinge 28 exakt und individuell für dieses gerade zu bearbeitende Werkstück in seiner aktuellen Lage zu bestimmen, zu korrigieren oder zu verifizieren.

Ein klingenprüfgerät ist am Halte basiselement 24 des kombiwerkzeugs 22 angeornet.

Die Schärfeprüfung wird somit direkt an dem Kombiwerkzeug 22 selbst durchgeführt. Der Roboter verfährt die Klinge 28 in ihre Startposition im Nahbereich des Werkstücks 16. Bei der Positionierung wird darauf geachtet, dass der Bewegungspfad der Klinge 18 beim Schneiden der Schutzfolie 36 technisch möglichst optimal verläuft, so dass die erforderlichen Schnittgeschwindigkeiten, Schneidwinkel usw. eingehalten werden. Vergleichsweise kleine Störungen im Bewegungsablauf der Klinge 18, die sich beispielsweise aus Maßungenauigkeiten des Werkstücks 16 an der zu beschneidenden Kante ergeben, werden durch eine entsprechende Ausgleichsvorrichtung, die in der Figur jedoch nicht näher dargestellt ist, ausgeglichen. Bei einer solchen Ausgleichvorrichtung ist die Klinge zum Beispiel federnd gelagert, insbesondere senkrecht zur Schneidbewegung der Klingenschneide. Im gewählten Beispiel besteht der Bewegungspfad zum Schneiden der Schutzfolie 36 entlang der Kanten, an denen die Schutzfolie 36 über das Werkstück 16 hinausragt, aus vier einzelnen geraden Teilbewegungen, so dass nach dem Ende dieser vier Bewegungen das Werkstück 16 entlang der Kanten einmal umfahren ist.

Nach dem Ende des Schneidvorganges bewegt der Roboterarm 20 des Kombiwerkzeuges 22 wieder in eine Position in etwa oberhalb des Werkstücks 16, in einer Weise, dass die Kamera 30 ein weiteres Bild des Werkstückes 16 aufnehmen kann. Durch ein entsprechend eingerichtetes Bildverarbeitungssystem wird eine Qualitätskontrolle des Schnittes durchgeführt und im Falle ausreichender Schnittqualität das Werkstück 16 durch die Sauggreifvorrichtung 22 wieder aufgenommen und vom Werkstücktisch 14 in eine Übergabeposition für bearbeitete Werkstücke verbracht.

## Patentansprüche

1. Roboterwerkzeug (22) zum Bearbeiten von Werkstücken (16) mit einem Anschlusselement für eine Verbindung mit einem Roboter **dadurch gekennzeichnet, dass** eine Schneidklinge (28) durch einen mit dem Halteelement (24) verbundenen Klingenhalter (26) in einer vorgegebenen Position gehalten ist, wobei die Schneidklinge (28) federnd mit dem Halteelement (24) verbunden ist, dass eine Greifvorrichtung (44) mit dem Halteelement (24) verbunden, insbesondere lösbar verbunden ist, dass das Halteelement (24) ein Klingenprüfgerät (40) für die Schneidklinge (28) aufweist und dass das Halteelement (24) durch das Anschlusselement mit dem Roboter (12) verbindbar ist.

2. Roboterwerkzeug (22) nach Anspruch 1, **dadurch gekennzeichnet, dass** das Halteelement (24) ein Klingenwechselgerät (42) aufweist.

3. Roboterwerkzeug (22) nach einem der vorgenannten Ansprüche, **dadurch gekennzeichnet, dass** die Schneidklinge (28) eine Heißklinge ist.

4. Roboterwerkzeug (22) nach einem der vorgenannten Ansprüche, **dadurch gekennzeichnet, dass** das Halteelement (24) ein weiteres Anschlusselement aufweist.

5. Roboterwerkzeug (22) nach einem der vorherigen Ansprüche, **dadurch gekennzeichnet, dass** die Greifvorrichtung (44) eine Sauggreifvorrichtung ist.

6. Roboterwerkzeug (22) nach einem der vorgenannten Ansprüche, **dadurch gekennzeichnet, dass** das Halteelement (24) einen Sensor (30) aufweist, der optisch oder laserbasiert ist.

7. Roboterwerkzeug (22) nach Anspruch 6, **dadurch gekennzeichnet, dass** mit dem Sensor (30) wenigstens ein zuvor vorgegebener Bezugspunkt oder eine Bezugskante an einem zu bearbeitenden Werkstück (16) oder im Arbeitsbereich des Roboters (12) verifizierbar ist.

8. Roboterwerkzeug (22) nach Anspruch 6 oder 7, **dadurch gekennzeichnet, dass** mit dem Sensor (30) das Werkstück (16) vermessbar ist.

9. Roboterwerkzeug (22) nach einem der Ansprüche 6 bis 8, **dadurch gekennzeichnet, dass** mit dem Sensor (30) die Lage eines Werkstückes (16) erkennbar und gegebenenfalls ein Bewegungsprogramm des Roboters (12) mit der erkannten Lage korrigierbar ist.

10. **Robotersystem (10)** zum Bearbeiten von Werkstücken mit einem Roboter und einem Roboterwerkzeug nach einem der Ansprüche 1 bis 9.

11. **Verfahren** zum Bearbeiten von Werkstücken mit einem Roboterwerkzeug (22) nach einem der Ansprüche 1 bis 9, **dadurch gekennzeichnet, dass** die Schneidklinge (28) durch das Robotersystem (10) nach Anspruch 10 entlang eines vorgegebenen Bewegungspfades bewegt wird und dass der Roboter (12) ein zu bearbeitendes Werkstück (16) mit der Greifvorrichtung (44) aufnimmt und an eine vorbestimmte Position, insbesondere an einen Werkstückhalter oder Werkstücktisch (14), verbringt.

12. Verfahren nach Anspruch 11, **dadurch gekennzeichnet, dass** ein Startpunkt oder ein Referenzpunkt für einen Startpunkt des Bewegungspfades durch den Sensor ermittelt wird und dass die Lage oder / und die Dimensionen des Werkstückes (16) mit dem Sensor (30) vermessen werden.

13. Verfahren nach Anspruch 11, **dadurch gekennzeichnet, dass** die Schneidklinge (28) vor dem Schneiden auf eine vorgegebene Temperatur erhitzt wird.

14. Verfahren nach einem der Ansprüche 11 oder 12, **dadurch gekennzeichnet, dass** die Beschaffenheit der Schneidklinge (28) vor oder / und nach jedem Schnitt geprüft wird.

15. Verfahren nach einem der Ansprüche 11 bis 13, **dadurch gekennzeichnet, dass** die Schneidklinge (28) nach einem vorgegebenen Kriterium gewechselt wird, insbesondere in Abhängigkeit von ihrer Beschaffenheit oder von der Benutzungszeit oder der Schnittlänge.

## Claims

1. Robot tool (22) for processing of workpieces (16) having a connecting element for connecting to a robot, **characterized in that** a cutting blade (28) is held in a predetermined position by a blade holder (26) connected to the holding element (24), the cutting blade (28) being connected in a sprung manner to the holding element (24), **in that** a gripping apparatus (44) is connected, in particular detachably connected, to the holding element (24), **in that** the holding element (24) has a blade tester appliance (40) for the cutting blade (28), and **in that** the holding element (24) can be connected to the robot (12) by the connecting element.

2. Robot tool (22) according to Claim 1, **characterized in that** the holding element (24) has a blade changer appliance (42).

3. Robot tool (22) according to one of the abovementioned claims, **characterized in that** the cutting blade (28) is a hot blade.

4. Robot tool (22) according to one of the abovementioned claims, **characterized in that** the holding element (24) has a further connecting element.

5. Robot tool (22) according to one of the previous claims, **characterized in that** the gripping apparatus (44) is a suction gripping apparatus.

6. Robot tool (22) according to one of the abovementioned claims, **characterized in that** the holding element (24) has a sensor (30), which is optical or laser-based.

7. Robot tool (22) according to Claim 6, **characterized in that** the sensor (30) can be used to verify at least one previously predetermined reference point or a reference edge on a workpiece (16) to be processed or in the working area of the robot (12).

8. Robot tool (22) according to Claim 6 or 7, **characterized in that** the sensor (30) can be used to measure the workpiece (16).

9. Robot tool (22) according to one of Claims 6 to 8, **characterized in that** the sensor (30) can be used to identify the position and orientation of a workpiece (16) and, if necessary, can be used to correct a movement programme for the robot (12), using the identified position and orientation.

10. **Robot system (10)** for processing of workpieces having a robot and having a robot tool according to one of Claims 1 to 9.

11. **Method** for processing of workpieces using a robot tool (22) according to one of Claims 1 to 9, **characterized in that** the cutting blade (28) is moved along a predetermined movement path by the robot system (10) according to Claim 10 and **in that** the robot (12) uses the gripping apparatus (44) to hold a workpiece (16) to be processed, and moves it to a predetermined position, in particular to a workpiece holder or workpiece table (14).

12. Method according to Claim 11, **characterized in that** a starting point or a reference point is determined by the sensor for a starting point of the movement path and **in that** the position and orientation and/or the dimensions of the workpiece (16) are/is measured by means of the sensor (30).

13. Method according to Claim 11, **characterized in that** the cutting blade (28) is heated to a predetermined temperature before cutting.

14. Method according to one of Claims 11 or 12, **characterized in that** the condition of the cutting blade (28) is tested before and/or after each cut.

15. Method according to one of Claims 11 to 13, **characterized in that** the cutting blade (28) is replaced on the basis of a predetermined criterion, in particular as a function of its condition, of the usage time or of the cut length.

## Revendications

1. Outil de robot (22) pour usiner des pièces (16) comprenant un élément de raccordement pour une liaison avec un robot, **caractérisé en ce qu'**une lame de coupe (28) est maintenue dans une position prédéterminée par un porte-lame (26) relié à l'élément de maintien (24), la lame de coupe (28) étant reliée de manière élastique avec l'élément de maintien (24), **en ce qu'**un dispositif de préhension (44) est relié avec l'élément de maintien (24), notamment relié de manière amovible, **en ce que** l'élément de maintien (24) présente un contrôleur de lame (40) pour la lame de coupe (28) et **en ce que** l'élément de maintien (24) peut être relié avec le robot (12) par le biais de l'élément de raccordement.

2. Outil de robot (22) selon la revendication 1, **caractérisé en ce que** l'élément de maintien (24) présente un changeur de lame (42).

3. Outil de robot (22) selon l'une des revendications précédentes, **caractérisé en ce que** la lame de coupe (28) est une lame chauffante.

4. Outil de robot (22) selon l'une des revendications précédentes, **caractérisé en ce que** l'élément de maintien (24) présente un autre élément de raccordement.

5. Outil de robot (22) selon l'une des revendications précédentes, **caractérisé en ce que** le dispositif de préhension (44) est un dispositif de préhension par aspiration.

6. Outil de robot (22) selon l'une des revendications précédentes, **caractérisé en ce que** l'élément de maintien (24) présente un capteur (30) qui est à base optique ou à laser.

7. Outil de robot (22) selon la revendication 6, **caractérisé en ce que** le capteur (30) permet de vérifier au moins un point de référence ou un bord de référence préalablement prédéfini sur une pièce (16) à usiner ou dans la zone de travail du robot (12).

8. Outil de robot (22) selon la revendication 6 ou 7, **caractérisé en ce que** la pièce (16) peut être mesurée avec le capteur (30).

9. Outil de robot (22) selon l'une des revendications 6 à 8, **caractérisé en ce que** le capteur (30) permet de détecter la position de la pièce (16) et un programme de déplacement du robot (12) peut éventuellement être corrigé en fonction de la position détectée.

10. Système à robot (10) pour usiner des pièces comprenant un robot et un outil de robot selon l'une des revendications 1 à 9.

11. Procédé pour usiner des pièces avec un outil de robot (22) selon l'une des revendications 1 à 9, **caractérisé en ce que** la lame de coupe (28) est déplacée par le système à robot (10) selon la revendication 10 le long d'un chemin de déplacement prédéfini et **en ce que** le robot (12) prend une pièce (16) à usiner avec le dispositif de préhension (44) et l'amène en une position prédéterminée, notamment sur un porte-pièce ou sur une table à pièce (14).

12. Procédé selon la revendication 11, **caractérisé en ce qu'**un point de départ ou un point de référence du chemin de déplacement est déterminé par le capteur et **en ce que** la position et/ou les dimensions de la pièce (16) sont mesurées avec le capteur (30).

13. Procédé selon la revendication 11, **caractérisé en ce que** la lame de coupe (28) est chauffée avant la coupe à une température prédéfinie.

14. Procédé selon l'une des revendications 11 ou 12, **caractérisé en ce que** la structure de la lame de coupe (28) est contrôlée avant et/ou après chaque coupe.

15. Procédé selon l'une des revendications 11 à 13, **caractérisé en ce que** la lame de coupe (28) est remplacée d'après un critère prédéterminé, notamment en fonction de sa structure ou du temps d'utilisation ou encore de la longueur de coupe.
